# EUROPÄISCHE PATENTSCHRIFT

(11) **EP 3 152 050 B1**
(45) Veröffentlichungstag und Bekanntmachung des Hinweises auf die Patenterteilung: **29.08.2018**
(21) Anmeldenummer: 15730417.1
(22) Anmeldetag: 02.06.2015
(51) Int. Cl.: B32B 15/08, B32B 37/06, B32B 37/20

(54) **VERFAHREN UND VORRICHTUNG ZUR VERBUNDWERKSTOFFHERSTELLUNG MIT DIREKTER KASCHIERSPALTERWÄRMUNG**
METHOD AND DEVICE FOR COMPOSITE MATERIAL PRODUCTION USING DIRECT LAMINATING GAP HEATING
PROCÉDÉ ET DISPOSITIF POUR LA FABRICATION D'UN MATÉRIAU COMPOSITE AVEC CHAUFFAGE DIRECT DE L'EMPRISE DE LAMINAGE

(30) Priorität: 04.06.2014 DE 102014107898
(43) Veröffentlichungstag der Anmeldung: 12.04.2017
(73) Patentinhaber: ThyssenKrupp Steel Europe AG, 47166 Duisburg (DE); thyssenkrupp AG, 45143 Essen (DE)
(72) Erfinder: KOCH, Klaus-Peter, 58332 Schwelm (DE)
(74) Vertreter: thyssenkrupp Intellectual Property GmbH
(86) Internationale Anmeldenummer: PCT/EP2015/062273
(87) Internationale Veröffentlichungsnummer: WO 2015/185559

(56) Entgegenhaltungen:
- EP-A1- 2 660 040
- DE-A1- 19 812 302
- US-A- 3 725 169

## Beschreibung

Die Erfindung betrifft ein Verfahren zur Herstellung eines bandförmigen Verbundwerkstoffs umfassend mindestens zwei metallische Deckschichten und mindestens eine zwischen den metallischen Deckschichten angeordnete Kunststoffschicht, wobei das Verfahren die folgenden Verfahrensschritte umfasst:
- Zuführen eines ersten und eines zweiten Metallbandes zu einer Kaschiervorrichtung zur Bereitstellung der metallischen Deckschichten, wobei die Kaschiervorrichtung mindestens zwei, einen gemeinsamen Kaschierspalt bildende Kaschierwalzen aufweist und die Metallbänder dem Kaschierspalt derart zugeführt werden, dass die Metallbänder vor dem Eintritt in den Kaschierspalt einen Winkel zueinander einnehmen,
- Zuführen mindestens einer vorzugsweise aus einem thermoplastischen Kunststoff bestehenden Kunststofffolie in den Kaschierspalt zur Bereitstellung der Kunststoffschicht, wobei die mindestens eine Kunststofffolie zwischen den mindestens zwei Metallbändern angeordnet dem Kaschierspalt zugeführt wird und zwischen der Kunststofffolie und mindestens einem der Metallbänder ein Winkel gebildet wird und
- Kaschieren der Metallbänder und der Kunststofffolie zu einem Verbundwerkstoff unter Anwendung von Druck und Wärme über die Kaschierwalzen im Kaschierspalt.

Darüber hinaus betrifft die Erfindung eine Kaschiervorrichtung zur Durchführung des erfindungsgemäßen Verfahrens.

Die Herstellung eines bandförmigen Verbundwerkstoffs, welches mindestens eine Kunststoffschicht und mindestens zwei äußere metallische Deckschichten aufweist, ist aus dem Stand der Technik bekannt. Üblicherweise werden Verbundwerkstoffe, welche mindestens zwei metallische Deckschichten aufweisen, dadurch hergestellt, dass die beiden metallischen Bänder nach einer Vorbehandlung, beispielsweise einem Entfetten und Vorbereiten der Oberfläche, einer Kaschiervorrichtung zugeführt werden. Die Metallbänder werden vor dem Eintritt in den Kaschierspalt erwärmt und auf eine spezifische, an die verwendete Kunststoffschicht angepasste Temperatur gebracht. Im Kaschierspalt wird dann neben den beiden Metallbändern die Kunststoffschicht vorzugsweise in Form einer Kunststofffolie zugeführt und unter Verwendung der Kaschierwalzen der Kaschiervorrichtung zu einem bandförmigen Verbundwerkstoff kaschiert. Beim Kaschieren der beiden Metallbänder im Kaschierspalt ist ein entscheidender Parameter die Temperatur der Metallbänder bzw. der Kunststofffolie im Kaschierspalt, denn hier findet die Ausbildung der Verbindung zwischen Metallband und Kunststofffolie statt. Einerseits darf die Metalltemperatur der Metallbänder nicht so hoch sein, dass vorgelagerte Verfahrensschritte, beispielsweise ein aufgebrachter Haftvermittler oder eine Oberflächenstruktur auf der Außenseite eines Metallbandes durch die Erwärmung negativ beeinflusst wird. Außerdem darf die Kunststofffolie beim Kontakt mit den heißen Metallbändern kein Schaden nehmen. Daneben besteht das Problem, dass die Kunststofffolie, wenn sie beispielsweise aus einem thermoplastischen Kunststoff besteht, als solches empfindlich auf hohe Temperaturen reagiert, da sich aufgrund der Erwärmung die mechanischen Eigenschaften der Kunststofffolie stark ändern können. Es besteht ein erhöhtes Risiko für ein Reißen der Kunststofffolie während der Produktion. Die Temperatur der Kunststofffolie kann daher nur in engen Grenzen eingestellt werden. Aufgrund von Wärmeleitung tritt darüber hinaus unmittelbar nach dem Erwärmen der Metallbänder auch eine Abkühlung der Metallbänder auf, welche bis zum Eintreffen in den Kaschierspalt berücksichtigt werden muss. Zusätzlich kommt es im Kaschierspalt beim Zusammenfügen der Metallbänder und der Kunststofffolie typischerweise zu einem Temperaturausgleich zwischen Kunststofffolie und Metallbändern, so dass die zur Herstellung des Verbundes erforderliche Temperatur teilweise gar nicht mehr erreicht wird.
Ein gattungsgemäßes Verfahren sowie eine gattungsgemäße Vorrichtung sind aus der Patentschrift US 3 725 169 bekannt.

Hiervon ausgehend ist es Aufgabe der vorliegenden Erfindung, ein Verfahren sowie eine Vorrichtung vorzuschlagen, welches bzw. welche einen verbesserten Verbindungsprozess im Kaschierspalt gewährleistet.

Gemäß einer ersten Lehre der vorliegenden Erfindung wird die aufgezeigte Aufgabe für ein gattungsgemäßes Verfahren dadurch gelöst, dass unter Verwendung von radiativen Erwärmungsmitteln Wärme in den Kaschierspalt eingebracht wird, wobei die Strahlung der Erwärmungsmittel zur Erwärmung des Kaschierspalts durch die Metallbänder und/oder die Kunststofffolie im Bereich des Kaschierspalts zumindest teilweise absorbiert wird.

Bei der Verwendung von radiativen Erwärmungsmitteln kann die Wärme direkt und unmittelbar in den Kaschierspalt eingebracht werden, so dass durch die Absorption in den Metallbändern bzw. in der Kunststofffolie die Erwärmung bzw. die Temperatur der Metallbänder und der Kunststofffolie exakt eingestellt werden kann. Dabei gewährleistet der Winkel zwischen der Kunststofffolie und mindestens einem Metallband, dass eingebrachte Strahlung, sofern sie nicht vollständig absorbiert wird beispielsweise durch das Metallband reflektiert wird und erneut in die Kunststofffolie zurückgeworfen wird. In der Kunststofffolie findet dann ein erneuter Absorptionsprozess statt, welcher zusätzlich zu einer Erwärmung führt. Kommt es zu einer weiteren Reflektion an einer Grenzfläche, beispielsweise an dem gegenüberliegenden Metallband, so wird die Strahlung erneut in der Kunststofffolie bzw. an dem reflektierenden Metallband absorbiert. Insbesondere kann hierdurch die Temperatur im Kaschierspalt selbst beeinflusst, kontrolliert oder angehoben werden. Vorzugsweise kann durch Variation des Anstellwinkels die Strahlung wie beschrieben zuerst auf das Metallband gerichtet werden oder direkt auf die Kunststofffolie, wodurch die Temperatur im Kaschierspalt durch eine weitere Stellgröße positiv beeinflusst werden kann.

Gemäß einer ersten Ausgestaltung des Verfahrens werden die mindestens zwei Metallbänder sowie die mindestens eine Kunststofffolie vor dem Eintritt in den Kaschierspalt unter Verwendung von Erwärmungsmitteln, welche induktiv, konduktiv und/oder radiativ Wärme auf die Metallbänder und/oder die Kunststofffolie übertragen, erwärmt. Durch diese Ausgestaltung wird ein erster Erwärmungsprozess vor dem Eintritt der Metallbänder und der Kunststofffolie in den Kaschierspalt durchgeführt. Im Ergebnis können die radiativen Erwärmungsmittel zur Wärmeübertragung in dem Kaschierspalt mit geringeren Leistungen ausgestattet werden, so dass diese nicht die komplette Erwärmung übernehmen müssen. Insgesamt wird das Verfahren dadurch wirtschaftlicher. Welches Erwärmungsverfahren zur Erwärmung der Metallbänder und/oder der Kunststofffolie außerhalb des Kaschierspaltes gewählt wird, ist abhängig vom jeweiligen Werkstoff. Eine induktive Erwärmung hat sich beispielsweise bei Stahlbändern bewährt, wohingegen die radiative und konduktive Erwärmung Vorteile bei der Erwärmung der Kunststofffolie aufweist.

Gemäß einer nächsten Ausgestaltung des Verfahrens wird die Strahlung der Erwärmungsmittel im Kaschierspalt zwischen dem ersten Metallband und der Kunststofffolie und zwischen dem zweiten Metallband und der Kunststofffolie jeweils eingestrahlt und zumindest teilweise absorbiert. Hierdurch lassen sich beispielsweise auf jeder Seite der Kunststofffolie getrennte Temperaturen der Metallbänder einstellen, um so beispielsweise unterschiedlichen Dicken der Metallbändern Rechnung zu tragen. So wird beispielsweise bei der Verwendung einer Vorerwärmung ein dünnes Metallband deutlich schneller seine Temperatur verlieren als ein Metallband mit einer höheren Dicke, so dass einseitige eine höhere Leistung eingestrahlt werden müsste.

Werden als radiative Erwärmungsmittel Laser oder LEDs oder eine Kombination der genannten Erwärmungsmittel zur Erwärmung der Metallbänder und der Kunststofffolie im Kaschierspalt verwendet, kann die zu übertragende Wärmeenergie sehr präzise und punktgenau im Kaschierspalt übertragen werden, so dass eine sehr gute Prozesskontrolle erreicht wird. Als Laser kommen Gaslaser, Festkörperlaser oder Farbstofflaser in Betracht. CO₂-Laser als Gaslaser, aber auch Festkörperlaser, beispielsweise Ne:YAG-Laser sind im industriellen Einsatz bereits bekannt und können hohe Leistungen aufweisen. Aber auch Diodenlaser, welche kostengünstiger sind, können verwendet werden. Laser mit sehr hohen Leistungen können auch als alleinige Erwärmungsmittel verwendet werden. Laser weisen eine sehr hohe Genauigkeit in Bezug auf die örtliche Einbringung der Wärme auf, so dass der Wärmeeintrag extrem präzise erfolgt. LEDs sind noch kostengünstiger als Diodenlaser oder Laser, sind aber in Bezug auf die Abstrahlcharakteristik nicht so genau einstellbar. Dennoch lassen sich auch mit LEDs deutlich verbesserte Temperaturbedingungen im Kaschierspalt erzeugen.

Vorzugsweise werden im Kaschierspalt unter Verwendung der radiativen Erwärmungsmittel die Kunststofffolie und die Metallbänder auf beispielsweise mindestens 200 °C erwärmt. Es hat sich herausgestellt, dass bei der Verbundwerkstoffherstellung häufig die Temperatur im Kaschierspalt zu niedrig ist, da es aufgrund von Wärmeausgleichsvorgängen nach dem Vorerwärmen der Metallbänder und der Kunststofffolie im Kaschierspalt selbst tatsächlich eine reduzierte Kaschiertemperatur auftritt. Wie bereits zuvor ausgeführt, war insbesondere eine ausreichende Erwärmung der Kunststofffolie vor dem Eintritt in dem Kaschierspalt nicht möglich, da diese ihre mechanischen Eigenschaften dann deutlich ändert, insbesondere dann, wenn es sich um eine thermoplastische Kunststofffolie handelt. Durch die Temperatur von mindestens 200 °C im Kaschierspalt wird bei den üblicherweise verwendeten thermoplastischen Kunststoffen, insbesondere bei einem Blend aus Polyamid und Polyethylen eine sehr gute Verbindung zwischen den Metallbändern und der Kunststoffschicht erreicht, so dass die Qualität der hergestellten Verbundwerkstoffe gesteigert werden kann.

Gemäß einer weiteren Ausgestaltung des Verfahrens werden Metallbänder mit verschiedenen Dicken und/oder Güten dem Kaschierspalt zugeführt und eine auf die Dicken und/oder Güten des Metallbandes abgestimmte Temperatur auf jeder Seite der Kunststofffolie im Kaschierspalt eingestellt. Wie bereits zuvor ausgeführt, ist die Anpassung des Verfahrens auf spezifische Metalldicken oder Metallgüten, welche sich beispielsweise auch durch ihr Wärmeübertragungsverhalten unterscheiden, mit einfachen Mitteln durch Anpassung der Leistungsübertragung der radiativen Erwärmungsmittel möglich.

Gemäß einer besonders einfachen Ausgestaltung des Verfahrens wird die Temperatur im jeweiligen Kaschierspalt durch eine Vorsteuerung oder eine Regelung unter Verwendung von Temperaturmessmitteln eingestellt. Bei einer Vorsteuerung werden keine Messmittel benötigt, sondern vielmehr die Tatsache ausgenutzt, dass die Absorptionsbedingungen im Kaschierspalt in der Regel konstant sind und eine Temperaturerhöhung über die gewählte Leistung und Wellenlänge der radiativen Erwärmungsmittel fest eingestellt werden kann. Durch eine Regelung unter Verwendung von Temperaturmessmitteln kann darüber hinaus auch eine Änderung der Kaschierbedingungen berücksichtigt werden und ein sehr stabiler Kaschierprozess erreicht werden, in dem beispielsweise bei Abfall der Temperatur im Kaschierspalt die eingestrahlte Leistung erhöht wird.

Vorzugsweise wird gemäß einer weiteren Ausgestaltung des Verfahrens durch die radiativen Erwärmungsmittel im Kaschierspalt ein Temperaturprofil quer und/oder längs zur Metallband- und/oder Kunststofffolienerstreckung eingestellt. Beispielsweise kann es vorteilhaft sein, die Temperatur im Außenbereich der Metallbandoberfläche bzw. Kunststofffolie zu vergrößern, da es hier zu einem deutlich schnelleren Abfall der Temperatur nach dem Verlassen des Kaschierspalts kommt, so dass eine verbesserte Verbindung im Außenbereich des bandförmigen Verbundwerkstoffs erreicht werden kann. Andererseits kann durch die Berechnung der Absorption im Kaschierspalt zusätzlich erreicht werden, dass ein Temperaturprofil, beispielsweise ein lineares Temperaturprofil, eingestellt wird, welches in Längsachse zu einer schonenden Erwärmung der Metallbandoberfläche und der Kunststofffolie auf Kaschiertemperatur führt.

Schließlich kann das erfindungsgemäße Verfahren dadurch weiterverbessert werden, dass durch Temperieren mindestens einer der Kaschierwalzen die Temperatur der Metallbänder im Kaschierspalt zusätzlich eingestellt wird. Durch die Temperierung der Kaschierwalzen kann beispielsweise der Wärmeverlust der Metallbänder bei Kontakt mit den Kaschierwalzen deutlich reduziert werden und so die Leistung der radiativen Erwärmungsmittel zur Erwärmung des Kaschierspaltes weiter verkleinert werden.

Die Erfindung betrifft ferner eine Kaschiervorrichtung zur Herstellung eines bandförmigen Verbundwerkstoffs mit mindestens zwei metallischen Deckschichten und mindestens einer dazwischen angeordneten Kunststoffschicht, wobei die mindestens eine Kunststoffschicht durch mindestens eine Kunststofffolie bereitgestellt wird, für die mindestens zwei Metallbänder der metallischen Deckschichten und die mindestens eine Kunststofffolie jeweils Mittel zur Führung der mindestens zwei Metallbänder und der mindestens einen Kunststofffolie in einen durch mindestens zwei Kaschierwalzen gebildeten Kaschierspalt vorgesehen sind, wobei die Führungsmittel derart ausgebildet sind, dass die mindestens zwei Metallbänder vor dem Eintritt in den Kaschierspalt einen Winkel zueinander einnehmen und weitere Führungsmittel für die Kunststofffolie derart ausgebildet sind, dass vor dem Eintritt in den Kaschierspalt mindestens ein Metallband einen Winkel zur Kunststofffolie einnimmt. Eine entsprechende gattungsgemäße Kaschiervorrichtung löst gemäß einer zweiten Lehre der vorliegenden Erfindung die oben aufgezeigte Aufgabe dadurch, dass radiative Erwärmungsmittel zur Erwärmung des Kaschierspalts vorgesehen sind, welche derart angeordnet sind, dass die Strahlung im Bereich des Kaschierspalts in den Metallbändern und/oder der Kunststofffolie zumindest teilweise absorbiert wird.

Wie bereits zuvor ausgeführt, eröffnet das Vorsehen von radiativen Erwärmungsmitteln zur Erwärmung des Kaschierspaltes selbst die Möglichkeit, die Temperatur im Kaschierspalt zu beeinflussen und eine optimale Kaschiertemperatur einzustellen. Die erfindungsgemäße Kaschiervorrichtung kann mit sehr hoher Prozesssicherheit bandförmige Verbundwerkstoffe herstellen.

Sind gemäß einer weiteren Ausgestaltung der erfindungsgemäßen Kaschiervorrichtung die radiativen Erwärmungsmittel zur Erwärmung des Kaschierspalts derart ausgebildet, dass diese den Kaschierspalt zwischen dem ersten Metallband und der Kunststofffolie und dem zweiten Metallband und der Kunststofffolie jeweils getrennt erwärmen können, kann der Wärmeeintrag für die jeweilige Metallbandseite spezifisch gewählt und auf die beispielsweise unterschiedliche Dicken aufweisenden Metallbänder abgestimmt werden. Denkbar ist aber auch, dass nur auf einer Seite der Kunststofffolie Erwärmungsmittel zur Erwärmung des Kaschierspaltes vorgesehen sind.

Bevorzugt sind als radiative Erwärmungsmittel gemäß einer weiteren Ausgestaltung der Kaschiervorrichtung mindestens ein Laser oder LED's oder Kombinationen der genannten Erwärmungsmittel vorgesehen. Laser haben den Vorteil, dass diese einen extrem genauen Wärmeeintrag und insbesondere sehr örtlich begrenzten Wärmeeintrag ermöglichen, wobei der Strahlengang der Laser und deren Absorption sehr exakt bestimmt werden kann. Als Laser können Gaslaser, beispielsweise CO2-Laser, Festkörperlaser, beispielsweise Ne:YAG Laser oder Farbstofflaser verwendet werden. Diodenlaser sind ebenfalls Festkörperaser und kostengünstiger als Farbstofflaser. LED's haben den Vorteil, dass diese besonders kostengünstig sind und eine flächige Erwärmung im Kaschierspalt ermöglichen. Laser oder LEDs mit sehr hohen Leistungen können beispielsweise verwendet werden, sofern die radiativen Erwärmungsmittel alleinige Erwärmungsmittel für die Bereitstellung der Kaschiertemperatur im Kaschierspalt sind.

Um die Leistung der radiativen Erwärmungsmittel und damit deren Kosten zu reduzieren, sind gemäß einer weiteren Ausgestaltung Mittel zum Erwärmen der mindestens zwei Metallbänder und/oder der mindestens einen Kunststofffolie vor dem Eintritt in den Kaschierspalt vorgesehen, wobei die Erwärmungsmittel radiativ, konduktiv und/oder induktiv Wärme auf die Metallbänder und die Kunststofffolie übertragen können. Durch die vor dem Eintritt in den Kaschierspalt vorgesehenen Mittel zur Erwärmung der Metallbänder bzw. der Kunststofffolie wird eine gewisse Grundtemperatur der Kaschierpartner eingestellt, so dass durch die radiativen Erwärmungsmittel zur Wärmeübertragung im Kaschierspalt lediglich eine kleine Temperaturdifferenz, beispielsweise durch die Abkühlung der Metallbänder oder der Kunststofffolie auf dem Weg zum Kaschierspalt, korrigiert werden muss.

Unterstützt werden kann dieser Prozess gemäß einer weiteren Ausgestaltung der vorliegenden Erfindung dadurch, dass Mittel zur Temperierung der Kaschierwalzen vorgesehen sind. Durch die Temperierung der Kaschierwalzen wird erreicht, dass bei einer eingestellten Temperatur der Wärmeübertrag vom Metallband auf die Kaschierwalzen minimiert werden kann oder sogar Wärme auf das Metallband übertragen wird, so dass der Bedarf an radiativ übertragender Wärme weiter reduziert werden kann. Die radiativen Erwärmungsmittel zur Erwärmung des Kaschierspalts können dann sehr präzise zum Erreichen der Kaschiertemperatur eingesetzt werden.

Gemäß einer weiteren Ausgestaltung wird die Temperatur im Kaschierspalt unter Verwendung einer Vorsteuerung der radiativen Erwärmungsmittel, d.h. durch eine feste Einstellung der Leistungsabgabe der radiativen Erwärmungsmittel, eingestellt. Diese einfachste Variante der Kaschiervorrichtung kann darüber hinaus durch Mittel zur Temperaturmessung im Kaschierspalt und mindestens eine Steuerung für die radiativen Erwärmungsmittel zur Erwärmung des Kaschierspalts zumindest abhängig von der gemessenen Temperatur verbessert werden, so dass beispielsweise auch Prozessabweichungen durch unvorhergesehener Störungen durch die radiativen Erwärmungsmittel zur Erwärmung des Kaschierspaltes berücksichtigt werden können. Über eine Regelung kann daher ein exakter Temperaturkorridor erreicht werden, der einen optimalen Kaschierprozess gewährleistet.

Hierzu sind vorzugsweise als Mittel zur Temperaturmessung optische Messmittel, mindestens ein Pyrometer oder mindestens eine Zeilenkamera vorgesehen. Bei der Zeilenkamera handelt es sich um eine infrarotempfindliche Zeilenkamera, welche die Erwärmung über die Wärmeabstrahlung misst.

Im Weiteren soll die Erfindung anhand von Ausführungsbeispielen in Verbindung mit der Zeichnung näher erläutert werden. In der Zeichnung
- Fig. 1: in einer schematischen Schnittansicht ein Ausführungsbeispiel einer Vorrichtung zur Herstellung eines bandförmigen Verbundwerkstoffs und
- Fig. 2: in einer schematischen Schnittansicht eine Vergrößerung des Kaschierspalts aus dem Ausführungsbeispiel aus Fig. 1

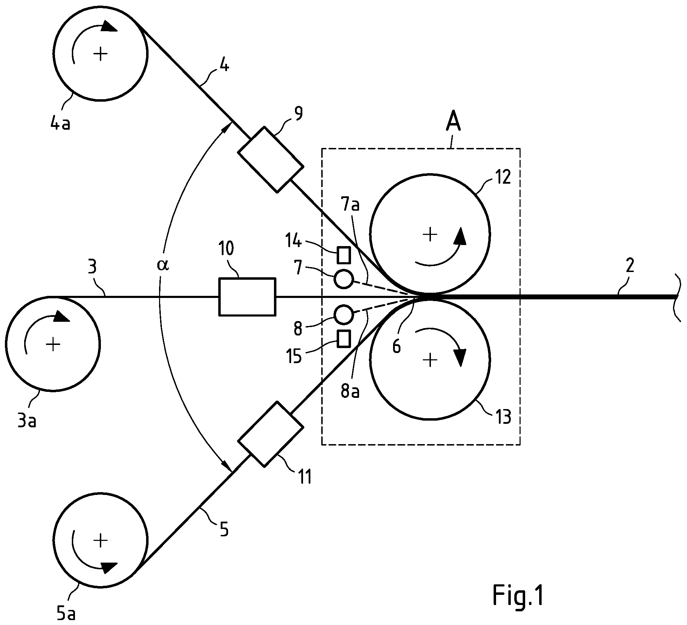

Fig. 1 zeigt zunächst eine Kaschiervorrichtung 1 gemäß einem Ausführungsbeispiel der vorliegenden Erfindung. Die Kaschiervorrichtung 1 dient zur Herstellung eines bandförmigen Verbundwerkstoffs 2, welcher mindestens zwei metallische Deckschichten und mindestens eine dazwischen angeordnete Kunststoffschicht, beispielsweise bestehend aus einem thermoplastischen Kunststoff aufweist. Die Kunststoffschicht wird durch mindestens eine Kunststofffolie 3 und die beiden metallischen Deckschichten durch die Metallbänder 4 und 5 bereitgestellt. Nur rudimentär dargestellt in Fig. 1 sind Führungsmittel 3a, 4a und 5a in Form von Abwickelhaspeln dargestellt, welche die Kunststofffolie 3 und die beiden Metallbänder 4, 5 einem Kaschierspalt 6 zuführen. Die beiden Metallbänder 4, 5 werden dabei durch die Anordnung der Führungsmittel bzw. durch die Ausgestaltung der Führungsmittel 4a, 5a in einem Winkel α zugeführt. Die Kunststofffolie 3 wird über die Führungsmittel 3a derart zugeführt, dass mindestens ein Metallband 4 bzw. 5 einen Winkel vor dem Eintritt in den Kaschierspalt zur Kunststofffolie einnimmt. Dies ermöglicht die Einstrahlung von Strahlung durch die radiativen Erwärmungsmittel in den Spalt.

In dem vorliegenden Ausführungsbeispiel sind auf beiden Seiten der Kunststofffolie radiative Erwärmungsmittel 7, 8 zur Erwärmung des Kaschierspalts vorgesehen, deren Strahlung 7a, 8a im Bereich des Kaschierspaltes in den Metallbändern und/oder der Kunststofffolie zumindest teilweise absorbiert wird. Hierzu bestrahlen die radiativen Erwärmungsmittel unmittelbar den Kaschierspalt selbst. Durch den Winkel zwischen der Kunststofffolie 3 und einem der Metallbänder 4 wird die eingestrahlte Strahlung nach zumindest teilweiser Absorption, beispielsweise im Metallband, wieder reflektiert und durch die Kunststofffolie 3 im Kaschierspalt 6 geleitet. In der Kunststofffolie 3 im Kaschierspalt 6 erfolgt eine weitere Absorption der Strahlung. Hierdurch wird im Kaschierspalt selbst Wärme übertragen und die Temperatur der Verbindungspartner im Kaschierspalt genau einstellbar, insbesondere durch den Anstellwinkel der Strahlung.

Wie der Fig. 1 zu entnehmen ist, sind die radiativen Erwärmungsmittel zur Erwärmung des Kaschierspalts 7, 8 derart ausgebildet, dass diese den Kaschierspalt 6 zwischen dem ersten Metallband 4 und der Kunststofffolie 3 und den Kaschierspalt 6 zwischen der Kunststofffolie 3 und dem zweiten Metallband 5 jeweils getrennt erwärmen können. Beide radiativen Erwärmungsmittel 7, 8 lassen sich in ihrer Leistung unabhängig voneinander einstellen. Denkbar ist aber auch, dass, beispielsweise bei der Verwendung von Lasern, über eine einzige Laserquelle beidseitig der Kunststofffolie Strahlung in den Kaschierspalt eingebracht wird. Ein entsprechendes Ausführungsbeispiel ist allerdings nicht dargestellt.

Die radiativen Erwärmungsmittel 7, 8 können beispielsweise als Laser, Hochleistungslaser, Diodenlaser oder LED's ausgebildet sein. Auch eine Kombination von LED's und Lasern ist denkbar, da die Erwärmungsmittel sehr gut in ihrer Leistungsübertragung gesteuert werden können.

In dem vorliegenden Ausführungsbeispiel in Fig. 1 sind zusätzlich Mittel zur Erwärmung 9, 10, 11 vorgesehen, welche die mindestens zwei Metallbänder 4,5 und die mindestens eine Kunststofffolie 3 vor dem Eintritt in den Kaschierspalt 6 erwärmen. Die Wärme wird auf die Metallbänder 4, 5 und die Kunststofffolie 3 radiativ, konduktiv oder induktiv oder auch eine Kombination der drei genannten Wärmeübertragungsmechanismen übertragen. Die so vorgewärmten Metallbänder 4, 5 und die vorgewärmte Kunststofffolie 3 muss dann durch die radiativen Erwärmungsmittel 7, 8 lediglich von der voreingestellten Temperatur auf die Kaschiertemperatur erwärmt werden.

Die Kaschierwalzen 12, 13, über welche im Kaschierspalt 6 eine Verbindung der Metallbänder und der Kunststofffolie erzielt wird, sind vorzugsweise temperiert, so dass der Temperaturverlust der Metallbänder bei Kontakt mit den Kaschierwalzen 12, 13 verringert werden kann. Insgesamt lässt sich damit der Kaschierprozess zusätzlich unterstützen, so dass eine verbesserte Verbindung erhalten wird.

Zusätzlich sind in Fig. 1 Mittel zur Temperaturmessung im Kaschierspalt 14, 15 dargestellt, welche beispielsweise zur Steuerung des Wärmeübertrags durch die radiativen Erwärmungsmittel 7, 8 verwendet werden. Durch die Messung der Temperatur im Kaschierspalt 6 kann beispielsweise unter Verwendung einer nicht dargestellten Regelungseinrichtung ein sehr genaues Temperaturprofil, beispielsweise in Quer- oder Längserstreckung der Metallfolie bzw. der Kunststofffolie gemessen und eingestellt werden. Als Messmittel sind beispielsweise optische Messmittel, zum Beispiel mindestens ein Pyrometer oder mindestens eine Zeilenkamera vorgesehen. Über die Zeilenkamera kann beispielsweise auch das Profil der Wärmeverteilung ermittelt und entsprechend über eine Steuerung der radiativen Erwärmungsmittel korrigiert werden.

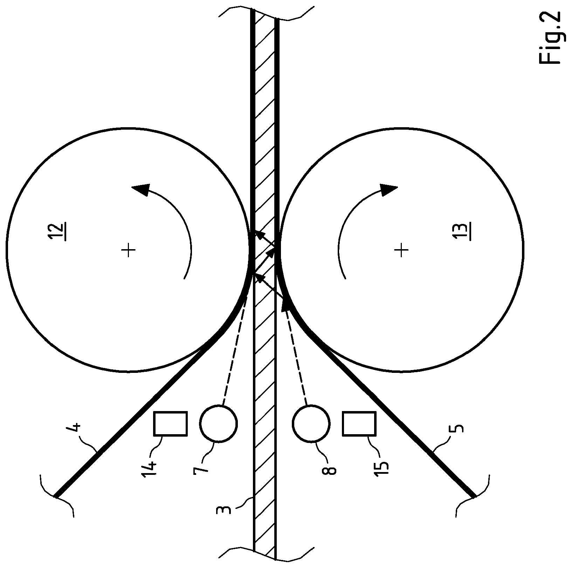

Der genaue Mechanismus der Wärmeübertragung durch die radiativen Erwärmungsmittel 7, 8 ist in Fig. 2 näher dargestellt, welche den Ausschnitt A aus Fig. 1 in Vergrößerung zeigt. Die Darstellung zeigt die Schichten des Verbundblechs nicht maßstabsgetreu. Durch den zwischen der Kunststofffolie 3 und mindestens einem der Metallbänder 4, 5 eingestellten Winkel wird bei Einstrahlung, beispielsweise von Laserstrahlung durch die radiativen Erwärmungsmittel 7, 8, diese beispielsweise am Metallband 4 reflektiert und in die Kunststofffolie 3 zurückgeworfen. Bei der Reflektion findet an dem Metallband 4 selbst eine Absorption statt, welche von dem Metallband und dessen Oberflächenbeschaffenheit abhängt. Beim Durchtritt durch die Kunststofffolie 3 wird die Strahlung erneut absorbiert und trägt zur Erhöhung der Temperatur im Kaschierspalt bei. Nach dem die Strahlung die Kunststofffolie 3 passiert hat, wird diese an der Grenzschicht zur Metalloberfläche des Metallbandes 5 erneut reflektiert und in die Kunststofffolie 3 zurückgeworfen. Bei jedem Reflektionsvorgang findet, wie bereits ausgeführt, ein Absorptionsvorgang im Metallband und anschließend in der Kunststofffolie statt. Bei der Absorption der Strahlung wird Energie freigesetzt, welche in einem Temperaturanstieg messbar ist. Alternativ und hier nicht dargestellt kann die Laserstrahlung der radiativen Erwärmungsmittel auf die Kunststofffolie gerichtet sein und tritt zunächst hindurch, wobei die Strahlung zum Teil absorbiert wird und zur Temperaturerhöhung beiträgt. Nach dem die Strahlung die Kunststofffolie erstmalig passiert hat, wird diese an der Grenzschicht zur Metalloberfläche des gegenüberliegenden Metallbandes zum Teil absorbiert und reflektiert und wird in die Kunststofffolie zurückgeworfen. Dieser Vorgang wiederholt sich, bis die Strahlungsenergie vollständig absorbiert ist. Beispielsweise kann durch eine getrennte Leistungseinstellung und/oder durch Variation des Anstellwinkels der Strahlung der radiativen Erwärmungsmittel 7 und 8 berücksichtigt werden, dass das Metallband 4 beispielsweise eine Dicke von 0,1 mm bis 0,3 mm aufweisen kann. Die Dickenunterschiede können, wie bereits ausgeführt, dazu führen, dass bei sehr geringen Metallbanddicken von beispielsweise 0,1 mm der Wärmeverlust durch den Transport zum Kaschierspalt deutlich größer ist als bei größeren Dicken von beispielsweise 0,3 mm. Dies kann durch die unterschiedliche Leistungseinstellung der radiativen Erwärmungsmittel 7, 8 berücksichtigt werden. Die Dicke der Kunststoffschicht beträgt beispielsweise 0,3 bis 1,0 mm. Allerdings sind auch andere Dicken der Kunststofffolie 3 bzw. der Metallbänder denkbar. Die Metallbänder sind vorzugsweise aus Stahl oder einer Stahlgüte. Unterschiedliche Stahlgüten und Folienwerkstoffe weisen auch unterschiedliche Absorptionseigenschaften auf, so dass auch hier eine getrennte Leistungseinstellung und/oder Variation des Anstellwinkels der Strahlung der radiativen Erwärmungsmittel von Vorteil ist.

In dem in Fig. 1 und Fig. 2 dargestellten Ausführungsbeispiel werden sowohl die Metallbänder 4, 5 als auch die Kunststofffolie 3 durch die Erwärmungsmittel 9, 10, 11 vorerwärmt. Beispielsweise kann eine Vorerwärmung der Metallbänder 4, 5 auf eine Temperatur von ca. 250 °C erfolgen. Die Temperatur der Metallbänder fällt bei Kontakt mit den Kaschierwalzen und insbesondere mit der Kunststofffolie, welche aufgrund der sich verändernden mechanischen Eigenschaften beispielsweise nur auf 100 °C erwärmt worden ist, stark ab. Ohne die Verwendung von radiativen Erwärmungsmitteln liegt die Kaschiertemperatur beispielsweise lediglich bei 160 °C. Wird beispielsweise eine Kunststofffolie aus einem Blend aus Polyamid und Polyethylen verwendet, kann die Kaschiertemperatur zu gering werden. Durch den Einsatz der radiativen Erwärmungsmittel 7,8, welche eine Wärmeübertragung direkt im Kaschierspalt ermöglichen, kann die Temperatur im Kaschierspalt auf beispielsweise mindestens 200 °C angehoben werden, so dass ideale Bedingungen zur Bereitstellung einer hoch qualitativen Verbindung zwischen den Metallbändern 4, 5 und der Kunststofffolie 3 nach dem Kaschieren ermöglicht wird. Durch die Regelungsmöglichkeiten der Temperatur durch Temperaturmessmittel 14, 15 kann insbesondere auch eine höhere Produktionsgeschwindigkeit und technologische Eigenschaften erreicht werden, da der Kaschierprozess temperaturkontrolliert erfolgt.

## Patentansprüche

1. Verfahren zur Herstellung eines bandförmigen Verbundwerkstoffs (2) umfassend mindestens zwei metallische Deckschichten und mindestens eine zwischen den metallischen Deckschichten angeordnete Kunststoffschicht, wobei das Verfahren die folgenden Verfahrensschritte umfasst:
- Zuführen eines ersten und eines zweiten Metallbandes (4, 5) zu einer Kaschiervorrichtung (1) zur Bereitstellung der metallischen Deckschichten, wobei die Kaschiervorrichtung (1) mindestens zwei, einen gemeinsamen Kaschierspalt (6) bildende Kaschierwalzen (12, 13) aufweist und die Metallbänder (4, 5) dem Kaschierspalt (6) derart zugeführt werden, dass die Metallbänder (4, 5) vor dem Eintritt in den Kaschierspalt (6) einen Winkel (α) zueinander einnehmen,
- Zuführen mindestens einer Kunststofffolie (3) in den Kaschierspalt (6) zur Bereitstellung der Kunststoffschicht, wobei die mindestens eine Kunststofffolie (3) zwischen den mindestens zwei Metallbändern (4, 5) angeordnet dem Kaschierspalt (6) zugeführt wird und zwischen der Kunststofffolie (3) und mindestens einem der Metallbänder (4, 5) ein Winkel gebildet wird und
- Kaschieren der Metallbänder (4, 5) und der Kunststofffolie (3) zu einem Verbundwerkstoff (2) unter Anwendung von Druck und Wärme über die Kaschierwalzen (12, 13) im Kaschierspalt (6),
**dadurch gekennzeichnet, dass**
unter Verwendung von radiativen Erwärmungsmitteln (7, 8) Wärme in den Kaschierspalt (6) eingebracht wird, wobei die Strahlung der Erwärmungsmittel (7, 8) zur Erwärmung des Kaschierspalts (6) durch die Metallbänder (4, 5) und/oder die Kunststofffolie (3) im Bereich des Kaschierspalts (6) zumindest teilweise absorbiert wird.

2. Verfahren nach Anspruch 1,
**dadurch gekennzeichnet, dass**
die mindestens zwei Metallbänder (4, 5) sowie die mindestens eine Kunststofffolie (3) vor dem Eintritt in den Kaschierspalt (6) unter Verwendung von Erwärmungsmitteln (9, 10, 11), welche induktiv, konduktiv und/oder radiativ Wärme auf die Metallbänder (4, 5) und/oder die Kunststofffolie (3) übertragen, erwärmt werden.

3. Verfahren nach Anspruch 1 oder 2,
**dadurch gekennzeichnet, dass**
die Strahlung der Erwärmungsmittel (7, 8) im Kaschierspalt (6) zwischen dem ersten Metallband (4) und der Kunststofffolie (3) und zwischen dem zweiten Metallband (5) und der Kunststofffolie (3) jeweils eingestrahlt und zumindest teilweise absorbiert wird.

4. Verfahren nach einem der Ansprüche 1 bis 3,
**dadurch gekennzeichnet, dass**
als radiative Erwärmungsmittel (7, 8) Laser oder LEDs oder eine Kombination der genannten Erwärmungsmittel (7, 8) zur Erwärmung der Metallbänder (4, 5) und der Kunststofffolie (3) im Kaschierspalt (6) verwendet werden.

5. Verfahren nach einem der Ansprüche 1 bis 4,
**dadurch gekennzeichnet, dass**
im Kaschierspalt (6) unter Verwendung der radiativen Erwärmungsmittel (7, 8) die Kunststofffolie (3) und die Metallbänder (4, 5) auf mindestens 200 °C erwärmt werden.

6. Verfahren nach einem der Ansprüche 1 bis 5,
**dadurch gekennzeichnet, dass**
Metallbänder (4, 5) mit verschiedenen Dicken und/oder Güten dem Kaschierspalt (6) zugeführt werden und eine auf die Dicken und/oder Güten des Metallbandes (4, 5) abgestimmte Temperatur auf jeder Seite der Kunststofffolie (3) im Kaschierspalt (6) eingestellt wird.

7. Verfahren nach einem der Ansprüche 1 bis 6,
**dadurch gekennzeichnet, dass**
die Temperatur im jeweiligen Kaschierspalt (6) durch eine Vorsteuerung oder eine Regelung unter Verwendung von Temperaturmessmitteln (14, 15) eingestellt wird.

8. Verfahren nach einem der Ansprüche 1 bis 7,
**dadurch gekennzeichnet, dass**
durch die radiativen Erwärmungsmittel (7, 8) im Kaschierspalt (6) ein Temperaturprofil quer und/oder längs zur Metallband- oder Kunststofffolienerstreckung eingestellt wird.

9. Verfahren nach einem der Ansprüche 1 bis 8,
**dadurch gekennzeichnet, dass**
durch Temperieren mindestens einer der Kaschierwalzen (12, 13) die Temperatur der Metallbänder (4, 5) im Kaschierspalt (6) eingestellt wird.

10. Kaschiervorrichtung (1) zur Herstellung eines bandförmigen Verbundwerkstoffs (2) mit mindestens zwei metallischen Deckschichten und mindestens einer dazwischen angeordneten Kunststoffschicht, wobei die mindestens eine Kunststoffschicht durch mindestens eine Kunststofffolie (3) und die metallischen Deckschichten durch mindestens zwei Metallbänder (4, 5) bereitgestellt werden, für die mindestens zwei Metallbänder (4, 5) und die mindestens eine Kunststofffolie (3) jeweils Mittel (3a, 4a, 5a) zur Führung der mindestens zwei Metallbänder (4, 5) und der mindestens einen Kunststofffolie (3) in einen durch mindestens zwei Kaschierwalzen (12, 13) gebildeten Kaschierspalt (6) vorgesehen sind, wobei die Führungsmittel (3a, 4a, 5a) derart ausgebildet sind, dass die mindestens zwei Metallbänder (4, 5) vor dem Eintritt in den Kaschierspalt (6) einen Winkel (α) zueinander einnehmen und weitere Führungsmittel für die Kunststofffolie (3) derart ausgebildet sind, dass vor dem Eintritt in den Kaschierspalt (6) mindestens ein Metallband (4, 5) einen Winkel zur Kunststofffolie (3) einnimmt, insbesondere zur Verwendung in einem Verfahren nach einem der Ansprüche 1 bis 9,
**dadurch gekennzeichnet, dass**
radiative Erwärmungsmittel (7, 8) zur Erwärmung der Metallbänder (4, 5) und/oder der Kunststofffolie (3) im Kaschierspalt (6) vorgesehen sind, welche derart angeordnet sind, dass die Strahlung im Bereich des Kaschierspalts (6) in den Metallbändern (4, 5) und/oder der Kunststofffolie (3) zumindest teilweise absorbiert wird.

11. Kaschiervorrichtung nach Anspruch 10,
**dadurch gekennzeichnet, dass**
die radiativen Erwärmungsmittel (7, 8) zur Erwärmung des Kaschierspalts (6) derart ausgebildet sind, dass diese den Kaschierspalt (6) zwischen dem ersten Metallband (4) und der Kunststofffolie (3) und dem zweiten Metallband (5) und der Kunststofffolie (3) jeweils getrennt erwärmen können.

12. Kaschiervorrichtung nach Anspruch 10 oder 11,
**dadurch gekennzeichnet, dass**
als radiative Erwärmungsmittel (7, 8) zur Erwärmung des Kaschierspalts (6) mindestens ein Laser, LED's oder Kombinationen der genannten Erwärmungsmittel vorgesehen sind.

13. Kaschiervorrichtung nach einem der Ansprüche 10 bis 12,
**dadurch gekennzeichnet, dass**
Mittel (9, 10, 11) zum Erwärmen der mindestens zwei Metallbänder (4, 5) und/oder der mindestens einen Kunststofffolie (3) vor dem Eintritt in den Kaschierspalt (6) vorgesehen sind, wobei die Erwärmungsmittel (9, 10,11) radiativ, konduktiv und/oder induktiv Wärme auf die Metallbänder (4, 5) und/oder die Kunststofffolie (3) übertragen können.

14. Kaschiervorrichtung nach einem der Ansprüche 10 bis 13,
**dadurch gekennzeichnet, dass**
Mittel zur Temperierung der Kaschierwalzen (12, 13) vorgesehen sind.

15. Kaschiervorrichtung nach einem der Ansprüche 10 bis 14,
**dadurch gekennzeichnet, dass**
Mittel (14, 15) zur Temperaturmessung im Kaschierspalt (6) und mindestens eine Steuerung für die radiativen Erwärmungsmittel (7, 8) zur Erwärmung des Metallbandes (4, 5) und der Kunststofffolie (6) im Kaschierspalt (6) zumindest abhängig von der gemessenen Temperatur vorgesehen ist.

16. Kaschiervorrichtung nach einem der Ansprüche 10 bis 15,
**dadurch gekennzeichnet, dass**
als Mittel (14, 15) zur Temperaturmessung optische Messmittel, mindestens ein Pyrometer oder mindestens eine Zeilenkamera vorgesehen ist.

## Claims

1. Method for producing a strip-shaped composite material (2) comprising at least two metallic outer layers and at least one plastics layer arranged between the metallic outer layers, the method comprising the following steps:
- feeding a first and a second metal strip (4, 5) to a laminating device (1) for providing the metallic outer layers, the laminating device (1) having at least two laminating rollers (12, 13), forming a common laminating gap (6), and the metal strips (4, 5) being fed to the laminating gap (6) in such a way that the metal strips (4, 5) assume an angle (α) in relation to one another before entering the laminating gap (6),
- feeding at least one plastics film (3) into the laminating gap (6) for providing the plastics layer, the at least one plastics film (3) being fed to the laminating gap (6) while being arranged between the at least two metal strips (4, 5) and an angle being formed between the plastics film (3) and at least one of the metal strips (4, 5) and
- laminating the metal strips (4, 5) and the plastics film (3) to form a composite material (2) by applying pressure and heat via the laminating rollers (12, 13) in the laminating gap (6),
**characterized in that**
by using radiative heating means (7, 8), heat is introduced into the laminating gap (6), the radiation of the heating means (7, 8) for heating the laminating gap (6) being at least partially absorbed by the metal strips (4, 5) and/or the plastics film (3) in the region of the laminating gap (6).

2. Method according to Claim 1,
**characterized in that**
the at least two metal strips (4, 5) and also the at least one plastics film (3) are heated before entering the laminating gap (6) by using heating means (9, 10, 11), which transmit heat to the metal strips (4, 5) and/or the plastics film (3) inductively, conductively and/or radiatively.

3. Method according to Claim 1 or 2,
**characterized in that**
the radiation of the heating means (7, 8) is respectively radiated in and at least partially absorbed in the laminating gap (6) between the first metal strip (4) and the plastics film (3) and between the second metal strip (5) and the plastics film (3).

4. Method according to one of Claims 1 to 3,
**characterized in that**
used as radiative heating means (7, 8) for heating the metal strips (4, 5) and the plastics film (3) in the laminating gap (6) are lasers or LEDs or a combination of the said heating means (7, 8).

5. Method according to one of Claims 1 to 4,
**characterized in that**
the plastics film (3) and the metal strips (4, 5) are heated to at least 200°C in the laminating gap (6) by using the radiative heating means (7, 8).

6. Method according to one of Claims 1 to 5,
**characterized in that**
metal strips (4, 5) of various thicknesses and/or qualities are fed to the laminating gap (6) and a temperature made to match the thicknesses and/or qualities of the metal strip (4, 5) is set on each side of the plastics film (3) in the laminating gap (6).

7. Method according to one of Claims 1 to 6,
**characterized in that**
the temperature in the respective laminating gap (6) is set by a feedforward control or a feedback control by using temperature measuring means (14, 15).

8. Method according to one of Claims 1 to 7,
**characterized in that**
a temperature profile is set transversely and/or longitudinally in relation to the extent of the metal strip or the extent of the plastics film by the radiative heating means (7, 8) in the laminating gap (6).

9. Method according to one of Claims 1 to 8,
**characterized in that**
the temperature of the metal strips (4, 5) in the laminating gap (6) is set by adjusting the temperature of at least one of the laminating rollers (12, 13).

10. Laminating device (1) for producing a strip-shaped composite material (2) comprising at least two metallic outer layers and at least one plastics layer arranged between them, the at least one plastics layer being provided by at least one plastics film (3) and the metallic outer layers being provided by at least two metal strips (4, 5), means (3a, 4a, 5a) being respectively provided for the at least two metal strips (4, 5) and the at least one plastics film (3) for guiding the at least two metal strips (4, 5) and the at least one plastics film (3) into a laminating gap (6) formed by means of two laminating rollers (12, 13), the guiding means (3a, 4a, 5a) being designed in such a way that the at least two metal strips (4, 5) assume an angle (α) in relation to one another before entering the laminating gap (6), and further guiding means for the plastics film (3) being designed in such a way that at least one metal strip (4, 5) assumes an angle in relation to the plastics film (3) before entering the laminating gap (6), in particular for use in a method according to one of Claims 1 to 9,
**characterized in that**
radiative heating means (7, 8) are provided for heating the metal strips (4, 5) and/or the plastics film (3) in the laminating gap (6) and are arranged in such a way that the radiation in the region of the laminating gap (6) is at least partially absorbed in the metal strips (4, 5) and/or the plastics film (3).

11. Laminating device according to Claim 10,
**characterized in that**
the radiative heating means (7, 8) for heating the laminating gap (6) are designed in such a way that they can respectively heat the laminating gap (6) between the first metal strip (4) and the plastics film (3) and the second metal strip (5) and the plastics film (3) separately.

12. Laminating device according to Claim 10 or 11,
**characterized in that**
provided as radiative heating means (7, 8) for heating the laminating gap (6) are at least one laser, LEDs or combinations of the said heating means.

13. Laminating device according to one of Claims 10 to 12,
**characterized in that**
means (9, 10, 11) for heating the at least two metal strips (4, 5) and/or the at least one plastics film (3) before entering the laminating gap (6) are provided, the heating means (9, 10, 11) being able to transmit heat to the metal strips (4, 5) and/or the plastics film (3) radiatively, conductively and/or inductively.

14. Laminating device according to one of Claims 10 to 13,
**characterized in that**
means for adjusting the temperature of the laminating rollers (12, 13) are provided.

15. Laminating device according to one of Claims 10 to 14,
**characterized in that**
means (14, 15) for measuring the temperature in the laminating gap (6) and at least one controller for the radiative heating means (7, 8) for heating the metal strip (4, 5) and the plastics film (6) in the laminating gap (6), at least depending on the measured temperature, are provided.

16. Laminating device according to one of Claims 10 to 15,
**characterized in that**
provided as means (14, 15) for measuring the temperature are optical measuring means, at least one pyrometer or at least one line-scan camera.

## Revendications

1. Procédé de fabrication d'un matériau composite (2) en forme de bande comprenant au moins deux couches de recouvrement métalliques et au moins une couche en matière plastique disposée entre les couches de recouvrement métalliques, le procédé comprenant les étapes suivantes:
acheminement d'une première et d'une deuxième bande de métal (4, 5) à un dispositif de contrecollage (1) en vue de fournir les couches de recouvrement métalliques, le dispositif de contrecollage (1) possédant au moins deux rouleaux de contrecollage (12, 13) formant une fente de contrecollage (6) commune et les bandes de métal (4, 5) sont acheminées à la fente de contrecollage (6) de telle sorte que les bandes de métal (4, 5) forment un angle ( ) l'une par rapport à l'autre avant d'entrer dans la fente de contrecollage (6),
- acheminement d'au moins un film en matière plastique (3) dans la fente de contrecollage (6) en vue de fournir la couche en matière plastique, l'au moins un film en matière plastique (3) étant acheminé à la fente de contrecollage (6) disposé entre les au moins deux bandes de métal (4, 5) et un angle étant formé entre au moins l'une des bandes de métal (4, 5) et le film en matière plastique (3) et
- contrecollage des bandes de métal (4, 5) et du film en matière plastique (3) pour former un matériau composite (2) en utilisant la pression et la chaleur par le biais des rouleaux de contrecollage (12, 13) dans la fente de contrecollage (6),
**caractérisé en ce que**
de la chaleur est introduite dans la fente de contrecollage (6) en utilisant des moyens de réchauffement (7, 8) rayonnants, le rayonnement des moyens de réchauffement (7, 8) étant au moins partiellement absorbé par les bandes de métal (4, 5) et/ou le film en matière plastique (3) dans la zone de la fente de contrecollage (6) en vue de réchauffer la fente de contrecollage (6).

2. Procédé selon la revendication 1, **caractérisé en ce que** les au moins deux bandes de métal (4, 5) ainsi que l'au moins un film en matière plastique (3) sont réchauffés avant l'entrée dans la fente de contrecollage (6) en utilisant des moyens de réchauffement (9, 10, 11) qui transmettent de la chaleur aux bandes de métal (4, 5) et/ou au film en matière plastique (3) par induction, par conduction et/ou par irradiation.

3. Procédé selon la revendication 1 ou 2, **caractérisé en ce que** le rayonnement des moyens de réchauffement (7, 8) dans la fente de contrecollage (6) est respectivement irradié et au moins partiellement absorbé entre la première bande de métal (4) et le film en matière plastique (3) et entre la deuxième bande de métal (5) et le film en matière plastique (3).

4. Procédé selon l'une des revendications 1 à 3, **caractérisé en ce que** les moyens de réchauffement (7, 8) rayonnants utilisés pour réchauffer les bandes de métal (4, 5) et le film en matière plastique (3) dans la fente de contrecollage (6) sont un laser ou des LED ou une combinaison desdits moyens de réchauffement (7, 8).

5. Procédé selon l'une des revendications 1 à 4, **caractérisé en ce que** le film en matière plastique (3) et les bandes de métal (4, 5) sont réchauffés à au moins 200 °C dans la fente de contrecollage (6) en utilisant les moyens de réchauffement (7, 8) rayonnants.

6. Procédé selon l'une des revendications 1 à 5, **caractérisé en ce que** des bandes de métal (4, 5) ayant différentes épaisseurs et/ou qualités sont acheminées à la fente de contrecollage (6) et une température adaptée aux épaisseurs et/ou aux qualités de la bande de métal (4, 5) est réglée de chaque côté du film en matière plastique (3) dans la fente de contrecollage (6).

7. Procédé selon l'une des revendications 1 à 6, **caractérisé en ce que** la température dans la fente de contrecollage (6) respective est réglée par une commande pilote ou une régulation en utilisant des moyens de mesure de la température (14, 15).

8. Procédé selon l'une des revendications 1 à 7, **caractérisé en ce qu'**un profil de température dans la fente de contrecollage (6) est réglé par les moyens de réchauffement (7, 8) rayonnants transversalement et/ou longitudinalement par rapport à l'extension de la bande en métal ou du film en matière plastique.

9. Procédé selon l'une des revendications 1 à 8, **caractérisé en ce que** la température des bandes de métal (4, 5) dans la fente de contrecollage (6) est réglée par équilibrage de la température d'au moins l'un des rouleaux de contrecollage (12, 13).

10. Dispositif de contrecollage (1) servant à la fabrication d'un matériau composite (2) en forme de bande comprenant au moins deux couches de recouvrement métalliques et au moins une couche en matière plastique disposée entre celles-ci, l'au moins une couche en matière plastique étant fournie par au moins un film en matière plastique (3) et les couches de recouvrement métalliques par au moins deux bandes de métal (4, 5), des moyens (3a, 4a, 5a) destinés à acheminer les au moins deux bandes de métal (4, 5) et l'au moins un film en matière plastique (3) dans une fente de contrecollage (6) formée par au moins deux rouleaux de contrecollage (12, 13) étant respectivement prévus pour les au moins deux bandes de métal (4, 5) et l'au moins un film en matière plastique (3), les moyens de guidage (3a, 4a, 5a) étant configurés de telle sorte que les au moins deux bandes de métal (4, 5) forment un angle ( ) l'une par rapport à l'autre avant d'entrer dans la fente de contrecollage (6) et des moyens de guidage supplémentaires pour le film en matière plastique (3) étant configurés de telle sorte qu'au moins une bande de métal (4, 5) forme un angle par rapport au film en matière plastique (3) avant l'entrée dans la fente de contrecollage (6), notamment pour l'emploi dans un procédé selon l'une des revendications 1 à 9,
**caractérisé en ce que**
des moyens de réchauffement (7, 8) rayonnants sont présents dans la fente de contrecollage (6) pour réchauffer les bandes de métal (4, 5) et/ou le film en matière plastique (3), lesquels sont disposés de telle sorte que le rayonnement est au moins partiellement absorbé dans les bandes de métal (4, 5) et/ou le film en matière plastique (3) dans la zone de la fente de contrecollage (6).

11. Dispositif de contrecollage selon la revendication 10, **caractérisé en ce que** les moyens de réchauffement (7, 8) rayonnants destinés à réchauffer la fente de contrecollage (6) sont configurés de telle sorte que ceux-ci peuvent réchauffer la fente de contrecollage (6) respectivement séparément entre la première bande de métal (4) et le film en matière plastique (3) et entre la deuxième bande de métal (5) et le film en matière plastique (3).

12. Dispositif de contrecollage selon la revendication 10 ou 11, **caractérisé en ce que** les moyens de réchauffement (7, 8) rayonnants présents pour réchauffer la fente de contrecollage (6) sont un laser, des LED ou des combinaisons desdits moyens de réchauffement.

13. Dispositif de contrecollage selon l'une des revendications 10 à 12,
**caractérisé par** la présence de moyens (9, 10, 11) destinés à réchauffer les au moins deux bandes de métal (4, 5) et/ou l'au moins un film en matière plastique (3) avant l'entrée dans la fente de contrecollage (6), les moyens de réchauffement (9, 10, 11) pouvant transmettre de la chaleur aux bandes de métal (4, 5) et/ou au film en matière plastique (3) par irradiation, par conduction et/ou par induction.

14. Dispositif de contrecollage selon l'une des revendications 10 à 13,
**caractérisé en ce que** des moyens servant à l'équilibrage de la température des rouleaux de contrecollage (12, 13) sont prévus.

15. Dispositif de contrecollage selon l'une des revendications 10 à 14,
**caractérisé en ce que** des moyens (14, 15) servant à la mesure de la température dans la fente de contrecollage (6) et au moins une commande pour les moyens de réchauffement (7, 8) rayonnants destinés à réchauffer les bandes de métal (4, 5) et le film en matière plastique (6) dans la fente de contrecollage (6) sont prévus au moins en fonction de la température mesurée.

16. Dispositif de contrecollage selon l'une des revendications 10 à 15,
**caractérisé en ce que** les moyens (14, 15) présents pour la mesure de la température sont des moyens de mesure optiques, au moins un pyromètre ou au moins une caméra linéaire.
